# EUROPEAN PATENT SPECIFICATION

(11) **EP 4 312 111 B1**
(45) Date of publication and mention of the grant of the patent: **06.05.2026**
(21) Application number: 22204606.2
(22) Date of filing: 31.10.2022
(51) Int. Cl.: G06F 3/0481, G06F 3/023, G06F 3/038, G06F 3/14, G06F 9/451

(54) **SCREEN PROJECTION METHOD, SCREEN PROJECTION APPARATUS, ELECTRONIC DEVICE, STORAGE MEDIUM, AND CHIP**
BILDSCHIRMPROJEKTIONSVERFAHREN, BILDSCHIRMPROJEKTIONSVORRICHTUNG, ELEKTRONISCHE VORRICHTUNG, SPEICHERMEDIUM UND CHIP
PROCÉDÉ DE PROJECTION D'ÉCRAN, APPAREIL DE PROJECTION D'ÉCRAN, DISPOSITIF ÉLECTRONIQUE, SUPPORT D'INFORMATIONS ET PUCE

(30) Priority: 29.07.2022 CN 202210912134
(43) Date of publication of application: 31.01.2024
(73) Proprietor: Beijing Xiaomi Mobile Software Co., Ltd., Beijing 100085 (CN)
(72) Inventor: WANG, Xinghui, Beijing, 100085 (CN); XIN, Ying, Beijing, 100085 (CN)
(74) Representative: dompatent

(56) References cited:
- CN-A- 113 687 765
- US-A1- 2011 275 391
- US-A1- 2014 259 029
- US-A1- 2022 027 117
- US-A1- 2022 066 725
- US-A1- 2023 051 203

## Description

### TECHNICAL FIELD

The disclosure relates to the technical field of screen projection, and more particularly, to a screen projection method, a screen projection apparatus, an electronic device, a storage medium, and a chip.

### BACKGROUND

When a user uses a tablet computer, the virtual screen to be projected can be determined according to the target screen displayed by the tablet computer, and the virtual screen can be projected onto a screen projection device, thus facilitating a plurality of people to browse the projected content together.

In the related art, US 2011/0275391 A1 provides a mobile terminal, the mobile terminal includes a display, a user input unit configured to receive a user command, and a wireless communication unit configured to wirelessly communicate with a first entity over a first communication path and to wirelessly communicate with any of a plurality of external devices, each comprising a display, over a second communication path. The first communication path typically utilizes a different communication protocol than the second communication path. The mobile terminal also includes a controller configured to execute a first application, detect an event relating to a second application, and responsive to the detecting of the event, automatically search for external devices, which are among the plurality of external devices, that are available for communication with the mobile terminal over the second communication path.

In the related art, CN 113 687 765 A provides an input function control method, an input function control device and a storage medium. The input function control method is applied to a first device, the first device is connected with an input device, and in response to detecting that a sharing function of the input device is enabled and monitoring an input event sent by the input device, the input event is intercepted and the intercepted input event is forwarded to a second device connected with the first device. In this way, the input event sent by the input device connected with the first device is shared to the second device connected with the first device.

In the related art, US 2014/0259029 A1 provides a multi-input control method and system, and an electronic device supporting the same are provided. The multi-input control method includes receiving an activation request for multiple applications (apps), identifying one or more input units to operate the multiple apps, and assigning the input units to the multiple apps according to occurrence of an event or preset information so that the input units are operable to operate the apps in an independent manner.

In the related art, US 2022/027117 A1 provides a screen projection processing method. The method includes obtaining an operation for a first electronic device, responding to the operation by calling a task manager of the first electronic device to display a plurality of application objects managed by the task manager in a display area of the first electronic device, determining a first application object from the plurality of application objects, and projecting a first display content generated by an application program corresponding to the first application object in an operative state to a second display area of a second electronic device in real-time.

### SUMMARY

To overcome the problems present in the related art, the disclosure provides a screen projection method, a screen projection apparatus, an electronic device, a storage medium, and a chip.

According to a first aspect of the invention, there is provided a screen projection method performed by an electronic device. The electronic device is connected with an external control device, and the method includes:
in response to receiving a screen projection instruction triggered by a user, determining a virtual screen to be projected according to a target interface displayed by a target screen of the electronic device;
projecting the virtual screen to a target screen projecting device; and
in response to receiving a first control switching instruction triggered by the user, switching a control object of the external control device from the target screen to the virtual screen and setting a control object of a control component of the electronic device as the target screen;
where prompt information for prompting that the control object of the external control device is switched to the virtual screen is displayed on the target screen after the control object of the external control device is switched from the target screen to the virtual screen.

Preferably, in response to receiving the first control switching instruction triggered by the user, switching the control object of the external control device from the target screen to the virtual screen includes:
acquiring, from the first control switching instruction, a screen identifier of the virtual screen; and
switching the control object of the external control device from the target screen to the virtual screen according to the screen identifier.

Preferably, determining the virtual screen to be projected according to the target interface displayed by the target screen of the electronic device includes:
determining a screen projection object selected by the user from the target interface;
generating a screen projection interface according to the screen projection object; and
determining the virtual screen according to the screen projection interface, the virtual screen displaying the screen projection interface.

Preferably, the method further includes:
in response to receiving a first control event triggered by the user via the external control device, dispatching the first control event to the virtual screen.

Preferably, the method further includes:
in response to receiving a second control event triggered by the user through a control component of the electronic device, dispatching the second control event to the target screen.

Preferably, the method further includes:
in response to receiving a second control switching instruction triggered by the user, switching the control object of the external control device from the virtual screen to the target screen.

According to a second aspect of the invention, there is provided a screen projection apparatus, including:
a screen generation module, configured to, in response to receiving a screen projection instruction triggered by a user, determine a virtual screen to be projected according to a target interface displayed by a target screen of the electronic device;
a screen projection module, configured to project the virtual screen to a target screen projecting device; and
a switching module, configured to, in response to receiving a first control switching instruction triggered by the user, switch a control object of the external control device from the target screen to the virtual screen and set a control object of a control component of the electronic device as the target screen;
where prompt information for prompting that the control object of the external control device is switched to the virtual screen is displayed on the target screen after the control object of the external control device is switched from the target screen to the virtual screen.

Preferably, the switching module is further configured to acquire, from the first control switching instruction, a screen identifier of the virtual screen; and switch the control object of the external control device from the target screen to the virtual screen according to the screen identifier.

Preferably, the screen generation module is further configured to determine a screen projection object selected by the user from the target interface; generate a screen projection interface according to the screen projection object; and determine the virtual screen according to the screen projection interface, the virtual screen displaying the screen projection interface.

Preferably, the apparatus further includes:
a first dispatching module, configured to, in response to receiving a first control event triggered by the user via the external control device, dispatch the first control event to the virtual screen.

Preferably, the apparatus further includes:
a second dispatching module, configured to, in response to receiving a second control event triggered by the user through a control component of the electronic device, dispatch the second control event to the target screen.

Preferably, the switching module is further configured to in response to receiving a second control switching instruction triggered by the user, switch the control object of the external control device from the virtual screen to the target screen.

According to a third aspect of the invention, there is provided an electronic device, the device includes:
a processor; and a memory for storing instructions executable by the processor;
the processor is configured to, when executed, implement the steps of the method provided in the first aspect of the disclosure.

According to a fourth aspect of the invention, there is provided a non-transitory computer-readable storage medium, on which computer program instructions are stored, the program instructions, when executed by a processor, implement the steps of the method provided in the first aspect of the disclosure.

According to a fifth aspect of the invention, there is provided a chip including a processor and an interface; the processor is configured to read instructions to perform the steps of the screen projection method provided in the first aspect of the disclosure.

Technical solutions provided by the examples of the disclosure may include the following benefits:
the disclosure is capable of, in response to receiving a screen projection instruction triggered by a user, determining a virtual screen to be projected according to a target interface displayed by a target screen of the electronic device; projecting the virtual screen to a target screen projecting device; and, in response to receiving a first control switching instruction triggered by the user, switching a control object of the external control device from the target screen to the virtual screen and setting a control object of a control component of the electronic device as the target screen. In this way, the interactive operation with the virtual screen can be realized through the external control device connected with the electronic device, and the interactive operation with the target screen can be realized through the control component of the electronic device itself, so that the user can control the target screen projection device and the electronic device at the same time, thus making the operation mode of the control operation more flexible and improving the work efficiency.

It should be understood that the above general description and the following detailed description are only illustrative and explanatory, and do not limit the disclosure.

### BRIEF DESCRIPTION OF THE DRAWINGS

The accompanying drawings here, which are incorporated in and constitute a part of this description, illustrate examples consistent with the disclosure and, together with the description, serve to explain the principles of the disclosure.
Fig. 1 is an application scenario diagram illustrating a screen projection method according to an example.
Fig. 2 is a flow diagram illustrating the screen projection method.
Fig. 3 is a block diagram illustrating a screen projection apparatus according to an example.
Fig. 4 is a block diagram illustrating an electronic device according to an example.

### DETAILED DESCRIPTION

Examples will be described in detail here, and their examples are shown in the accompanying drawings. When the following description refers to the drawings, unless otherwise indicated, the same number in different drawings indicates the same or similar elements. The examples described in the following examples do not represent all examples consistent with the disclosure. On the contrary, they are only examples of apparatuses and methods consistent with some aspects of the disclosure as detailed in the appended claims.

When a user uses a tablet computer, the virtual screen to be projected can be determined according to the target screen displayed by the tablet computer, and the virtual screen can be projected onto a screen projection device, thus facilitating a plurality of people to browse the projected content together.

In the related technology, the tablet computer can be connected with an external control device (such as a keyboard and a mouse, etc.), and the target screen of the tablet computer can be controlled and operated by the external control device. However, the operation mode of the above control operation is relatively simple and inflexible.

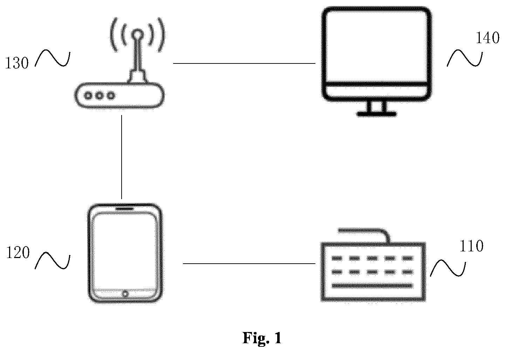

First, the application scenario of the disclosure is described. The disclosure can be applied to a screen projection scenario. As shown in Fig. 1, the scenario can include an electronic device 120, an external control device 110 connected to the electronic device 120, a local area network (LAN) device 130, and a target screen projection device 140. The electronic device is connected to the external control device, and the electronic device is connected to the target screen projection device through the LAN device, thus the electronic device and the target screen projection device are located in the same LAN. In another scenario, the electronic device can also be directly connected to the target screen projection device through short-range wireless communication (such as Bluetooth).

In the above scenarios, the electronic device can be a tablet computer, a laptop, a mobile phone and other terminals. The target screen projection device can be a display device that supports the screen projection function, such as a television or screen projection device. The external control device can be an external keyboard, a mouse, a touch pad or a voice input device (such as a microphone).

When the user needs to project the target interface displayed on the target screen of the electronic device to the target screen projection device, the user can determine the screen projection object on the target screen of the electronic device. For example, the user can take all the objects displayed on the target screen as screen projection objects, or select some objects from the target screen as screen projection objects. For example, the user can select at least one application interface from the plurality of application interfaces displayed on the target screen as the screen projection object. After the screen projection object is selected, the electronic device can generate a screen projection interface according to the screen projection object, and generate a virtual screen displaying the screen projection interface, and project the virtual screen to the target screen projection device, so as to display the virtual screen on the target screen projection device.

However, the inventor found that the user can only operate the target screen of the electronic device through the external control device, or when the screen projection interface displayed on the virtual screen is the same as the target screen displayed on the target screen of the electronic device, the user can use the external control device to control the target screen, so as to achieve the control operation of the virtual screen through a mirror image. The above operation mode can only operate the target screen or virtual screen, and cannot operate the target screen and virtual screen at the same time, which makes the operation mode of the control operation inflexible and affects the work efficiency.

In order to solve the above problem, the disclosure provides a screen projection method, a screen projection apparatus, an electronic device, a storage medium, and a chip. The method can switch the control object of the external control device from the target screen displayed by the electronic device to the virtual screen to be projected according to the first control switching instruction triggered by the user, so that the external control device can control the virtual screen. In addition, the control object of the control component of the electronic device is set as the target screen, so that the target screen can be controlled and operated through the control component of the electronic device itself. In this way, the user can simultaneously control the virtual screen displayed by the target projection device and the target screen displayed by the electronic device, thus making the operation mode of the control operation more flexible and improving the work efficiency.

The disclosure will now be described in conjunction with the examples.

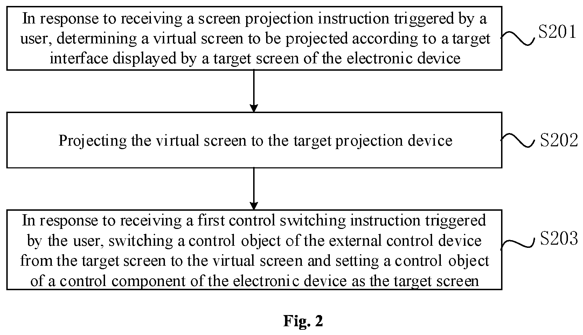

Fig. 2 is a flow diagram illustrating a screen projection method. As shown in Fig. 2, the screen projection method is performed by an electronic device, which is connected to an external control device. The method can include:
In S201, in response to receiving a screen projection instruction triggered by a user, a virtual screen to be projected is determined according to a target interface displayed by a target screen of the electronic device.

For example, when the user needs to project the target interface displayed on the target screen of the electronic device, a screen projection button displayed on the target interface can be triggered to trigger the screen projection instruction.

After triggering the screen projection instruction, in some examples, a screen projection object selected by the user from the target interface can be determined, a screen projection interface is generated according to the screen projection object, the virtual screen is determined according to the screen projection object, and the virtual screen displays the screen projection interface. The target interface can be the current display interface of the electronic device, and the screen projection object can be part of the target interface or at least one application interface of the target interface. Of course, the screen projection object can also include all the contents of the target interface, so the generated virtual screen can be regarded as a mirror image of the target screen.

For example, the target interface displays three application interfaces, namely an interface A, an interface B and an interface C. However, the user only wants to project the interface A in screen projection. After the screen projection instruction is triggered, the electronic device will display the selection interface. The selection interface can include three options: the interface A, the interface B and the interface C. The user selects the interface A (i.e. the projected object) through the selection interface, and the screen projection interface is generated according to the selected interface A, the screen projection interface includes the interface A, but does not include the interface B and the interface C.

In S202, the virtual screen is projected to the target projection device.

In S203, in response to receiving a first control switching instruction triggered by the user, a control object of the external control device is switched from the target screen to the virtual screen and a control object of a control component of the electronic device is set as the target screen.

The control component of the electronic device may be a touch screen, a keyboard, or a voice input device, and other assemblies of the electronic device itself, as an example, a switching button may be provided on the target screen of the electronic device, when the switching button is triggered by the user, the first control switching instruction is triggered, or the user may input a voice instruction through a voice input device, and the first control switching instruction is triggered.

In some examples, the control object of the external control device is the target screen of the electronic device by default. The first control switching instruction can include a screen identifier of the virtual screen. The first control switching instruction is configured to indicate that the control object of the external control device is switched from the target screen to the virtual screen. After the first control switching instruction is triggered, the screen identifier of the virtual screen can be obtained from the first control switching instruction, and the control object of the external control device can be switched from the target screen to the virtual screen according to the screen identifier, and the control object of the control component of the electronic device is set as the target screen. In this way, the virtual screen can be controlled by the external control device, and the target screen can be controlled by the control component of the electronic device itself.

After the control object of the external control device is switched from the target screen to the virtual screen, prompt information are displayed on the target screen. The prompt information is used for prompting that the control object of the external control device is switched to the virtual screen, so as to prompt the user that the control object is switched in time and improve the user experience.

With the above solution, the user can simultaneously control the virtual screen and the target screen displayed by the electronic device, thus making the operation mode of the control operation more flexible and improving the work efficiency.

In some examples, the first control event is dispatched to the virtual screen in response to receiving the first control event triggered by the user through the external control device.

For example, the first control event can be the update of the text content, such as modifying the text content, deleting the text content or adding the text content. For example, the user can trigger the input operation through an external control device (such as an external keyboard) to update the text content. The first control event can also be the control operation of the displayed application, for example, starting the application interface or closing the application interface. Of course, the first control event can also be other operations, which are not limited in the disclosure, such as turning the page of the document displayed on the screen projection interface of the virtual screen or switching the image displayed on the screen projection interface of the virtual screen. In this way, the first control event can directly control the virtual screen that is projected to the target projection device.

In other examples, the second control event is dispatched to the target screen in response to receiving the second control event triggered by the user through the control component of the electronic device.

The second control event can refer to the above description of the first control event, which will not be repeated here, so that the target screen of the electronic device can be controlled through the second control event.

It should be noted that the first control event and the second control event can be triggered at the same time. For example, one user can control the interface of the electronic device through the control component of the electronic device itself, and another user can control the interface of the target projection device through the external control device, which makes it more flexible to control and operate the target screen and the virtual screen in the screen projection scenario.

For example, illustration is made by still taking the situation that the above target interface displays three application interfaces, namely the interface A, the interface B and the interface C as an example. In this example, the screen projection interface displayed on the virtual screen only displays the interface A, a user A can operate the interface A displayed on the virtual screen through the external control device, and a user B can operate the interface B and/or the interface C displayed on the target screen through the control component of the electronic device itself, in such way, the user A and the user B can operate the virtual screen and target screen independently, which improves the work efficiency.

In some examples, in response to receiving the second control switching instruction triggered by the user, the control object of the external control device can be switched from the virtual screen to the target screen. The second control switching instruction is used for indicating that the control object of the external control device is switched from the virtual screen to the target screen. For example, the second control switching instruction can include the screen identifier of the target screen, the screen identifier of the target screen can be obtained from the second control switching instruction, and the control object of the external control device can be switched from the virtual screen to the target screen according to the screen identifier of the target screen. In this way, the control object of the external control device can be switched back to the target screen from the virtual screen, which facilitates the user to flexibly switch the control object of the external control device and improves the user experience.

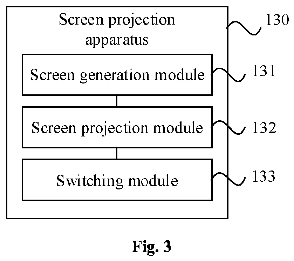

Fig. 3 is a block diagram illustrating a screen projection apparatus according to an example. Referring to Fig. 3, the apparatus 130 includes a screen generation module 131, a screen projection module 132, and a switching module 133.

The screen generation module 131 is configured to, in response to receiving a screen projection instruction triggered by a user, determine a virtual screen to be projected according to a target interface displayed by a target screen of the electronic device;
the screen projection module 132 is configured to project the virtual screen to a target screen projecting device; and
the switching module 133 is configured to in response to receiving a first control switching instruction triggered by the user, switch a control object of the external control device from the target screen to the virtual screen and set a control object of a control component of the electronic device as the target screen.

In some examples, the switching module is also configured to acquire, from the first control switching instruction, a screen identifier of the virtual screen; and switch the control object of the external control device from the target screen to the virtual screen according to the screen identifier.

In some examples, the screen generation module is also configured to determine a screen projection object selected by the user from the target interface; generate a screen projection interface according to the screen projection object; and determine the virtual screen according to the screen projection interface, the virtual screen displaying the screen projection interface.

In some examples, the apparatus also includes:
a first dispatching module, configured to, in response to receiving a first control event triggered by the user via the external control device, dispatch the first control event to the virtual screen.

In some examples, the apparatus also includes:
a second dispatching module configured to, in response to receiving a second control event triggered by the user through a control component of the electronic device, dispatch the second control event to the target screen.

In some examples, the switching module is also configured to, in response to receiving the second control switching instruction triggered by the user, switch the control object of the external control device from the virtual screen to the target screen.

As for the apparatus in the above example, the specific mode of each module to perform operations has been described in detail in the example of the method, and will not be described in detail here.

To sum up, the disclosure provides a screen projection method, a screen projection apparatus, an electronic device, a storage medium, and a chip. In response to receiving a screen projection instruction triggered by a user, a virtual screen to be projected is determined according to a target interface displayed by a target screen of the electronic device; the virtual screen is projected to a target screen projecting device; and, in response to receiving a first control switching instruction triggered by the user, a control object of the external control device is switched from the target screen to the virtual screen and a control object of a control component of the electronic device is set as the target screen. In this way, the interactive operation with the virtual screen can be realized through the external control device connected with the electronic device, and the interactive operation with the target screen can be realized through the control component of the electronic device itself, so that the user can control the target screen projection device and the electronic device at the same time, thus making the operation mode of the control operation more flexible and improving the work efficiency.

The disclosure also provides a non-transitory computer-readable storage medium, on which computer program instructions are stored. When the program instructions are executed by the processor, the steps of the screen projection method provided by the disclosure are realized.

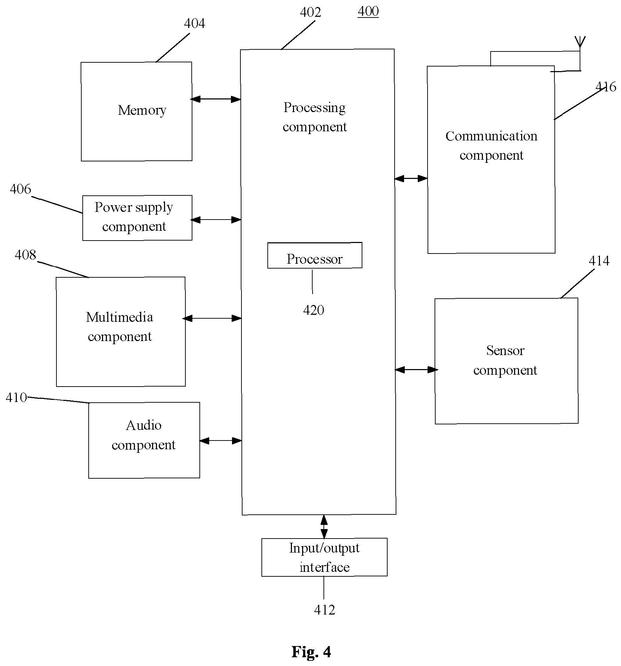

Fig. 4 is a block diagram illustrating an electronic device 400 according to an example. For example, the electronic device 400 can be a mobile phone, a computer, a digital broadcasting terminal, a message receiving and sending device, a game console, a tablet device, a medical device, a fitness device, a personal digital assistant, and the like.

Referring to Fig. 4, the electronic device 400 may include one or more of the following components: a processing component 402, a memory 404, a power supply component 406, a multimedia component 408, an audio component 410, an input/output interface 412, a sensor component 414, and a communication component 416.

The processing component 402 typically controls the overall operations of the electronic device 400, such as operations associated with display, telephone call, data communication, a camera operation, and a recording operation. The processing component 402 may include one or more processors 420 to execute instructions to complete all or part of the steps of the above screen projection method.

In addition, the processing component 402 may include one or more modules to facilitate interactions between the processing component 402 and other components. For example, the processing component 402 may include a multimedia module to facilitate interaction between the multimedia component 408 and the processing component 402.

The memory 404 is configured to store various types of data to support operations at the electronic device 400. Examples of such data include instructions, contact data, phone book data, messages, pictures, videos, and the like for any application or method operating on the electronic device 400. The memory 404 may be implemented by any type of volatile or non-volatile storage device or their combination, such as a static random access memory (SRAM), an electrically erasable programmable read-only memory (EEPROM), an erasable programmable read-only memory (EPROM), a programmable read only memory (PROM), a read-only memory (ROM), a magnetic memory, a flash memory, a disk or an optical disk.

The power supply component 406 provides power for various components of the electronic device 400. The power supply component 406 may include a power management system, one or more power supplies, and other components associated with power generating, managing, and distributing for the electronic device 400.

The multimedia component 408 includes a screen providing an output interface between the electronic device 400 and the user. In some examples, the screen may include a liquid crystal display (LCD) and a touch panel (TP). If the screen includes a touch panel, the screen may be implemented as a touch screen to receive an input signal from the user. The touch panel includes one or more touch sensors to sense touch, sliding, and gestures on the touch panel. The touch sensor may not only sense the boundary of a touch or slide operation, but also detect the duration and pressure associated with the touch or slide operation. In some examples, the multimedia component 408 includes a front camera and/or a rear camera. When the electronic device 400 is in an operation mode, such as a shooting mode or video mode, the front camera and/or rear camera can receive external multimedia data. Each front camera and rear camera can be a fixed optical lens system or have focal length and optical zoom capability.

The audio component 410 is configured to output and/or input audio signals. For example, the audio component 410 includes a microphone (MIC), which is configured to receive an external audio signal when the electronic device 400 is in an operation mode, such as a call mode, a recording mode, and a voice recognition mode. The received audio signal may be further stored in the memory 404 or transmitted via the communication component 416. In some examples, the audio component 410 also includes a speaker for outputting the audio signal.

The input/output interface 412 provides an interface between the processing component 402 and the peripheral interface module, and the peripheral interface module can be a keyboard, a click wheel, a button, etc. These buttons may include, but are not limited to, the Home button, the Volume button, the Start button, and the Lock button.

The sensor component 414 includes one or more sensors for providing status evaluation of various aspects for the electronic device 400. For example, the sensor component 414 can detect the open/closed state of the electronic device 400, the relative positioning of the components, for example, the components are the display and keypad of the electronic device 400. The sensor component 414 can also detect the position change of the electronic device 400 or one component of the electronic device 400, the presence or absence of the user's contact with the electronic device 400, the orientation or acceleration/deceleration of the electronic device 400, and the temperature change of the electronic device 400. The sensor component 414 may include a proximity sensor configured to detect the presence of nearby objects without any physical contact. The sensor component 414 may also include a light sensor, such as a CMOS or CCD image sensor, for use in imaging applications. In some examples, the sensor component 414 may also include an acceleration sensor, a gyroscope sensor, a magnetic sensor, a pressure sensor or a temperature sensor.

The communication component 416 is configured to facilitate wired or wireless communication between the electronic device 400 and other devices. The electronic device 400 may access a wireless network based on a communication standard, such as WiFi, 2G or 3G, or their combination. In an example, the communication component 416 receives a broadcast signal or broadcast related information from an external broadcast management system via a broadcast channel. In an example, the communication component 416 also includes a near field communication (NFC) module to facilitate short range communication. For example, the NFC module can be implemented based on radio frequency identification (RFID) technology, infrared data association (IrDA) technology, ultra wideband (UWB) technology, Bluetooth (BT) technology and other technologies.

In an example, the electronic device 400 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above screen projection method.

In the example, a non temporary computer-readable storage medium including instructions is also provided, such as a memory 404 including instructions, which can be executed by the processor 420 of the electronic device 400 to complete the above screen projection method. For example, the non temporary computer-readable storage medium can be a ROM, a random access memory (RAM), a CD-ROM, a tape, a floppy disk, an optical data storage device, etc.

In addition to being an independent electronic device, the apparatus can also be a part of an independent electronic device. For example, in one example, the apparatus can be an integrated circuit (IC) or a chip, and the integrated circuit can be one IC or a collection of a plurality of ICs; the chip can include but not limited to the following types: GPU (Graphics Processing Unit), CPU (Central Processing Unit), FPGA (Field Programmable Gate Array), DSP (Digital Signal Processor), ASIC (Application Specific Integrated Circuit), SOC (System on Chip, or system level chip), etc. The integrated circuit or chip can be used to execute executable instructions (or codes) to realize the screen projection method. The executable instructions can be stored in the integrated circuit or chip, or obtained from other apparatuses or devices. For example, the integrated circuit or chip includes a processor, a memory, and interfaces for communication with other apparatuses. The executable instruction can be stored in the memory, and when the executable instruction is executed by the processor, the screen projection method described above can be realized; alternatively, the integrated circuit or chip can receive executable instructions through the interface and transmit them to the processor for execution, so as to realize the above screen projection method.

In another example, a computer program product is also provided. The computer program product includes a computer program that can be executed by a programmable apparatus. The computer program has a code portion for executing the above screen projection method when executed by the programmable apparatus.

It should be understood that the disclosure is not limited to the precise structure already described above and shown in the drawings, and various modifications and changes can be made without departing from its scope. The scope of the disclosure is limited only by the appended claims.

## Claims

1. A screen projection method, performed by an electronic device which is connected with an external control device, comprising:
in response to receiving a screen projection instruction triggered by a user, determining (S201) a virtual screen to be projected according to a target interface displayed by a target screen of the electronic device;
projecting (S202) the virtual screen to a target screen projecting device; and
in response to receiving a first control switching instruction triggered by the user, switching (S203) a control object of the external control device from the target screen to the virtual screen and setting a control object of a control component of the electronic device as the target screen;
**characterized in that** prompt information for prompting that the control object of the external control device is switched to the virtual screen is displayed on the target screen after the control object of the external control device is switched from the target screen to the virtual screen.

2. The method according to claim 1, wherein in response to receiving the first control switching instruction triggered by the user, switching (S203) the control object of the external control device from the target screen to the virtual screen comprises:
acquiring, from the first control switching instruction, a screen identifier of the virtual screen;
and
switching the control object of the external control device from the target screen to the virtual screen according to the screen identifier.

3. The method according to claim 1 or 2, wherein determining (S201) the virtual screen to be projected according to the target interface displayed by the target screen of the electronic device comprises:
determining a screen projection object selected by the user from the target interface;
generating a screen projection interface according to the screen projection object; and
determining the virtual screen according to the screen projection interface, the virtual screen displaying the screen projection interface.

4. The method according to any one of claims 1 to 3, further comprising:
in response to receiving a first control event triggered by the user via the external control device, dispatching the first control event to the virtual screen.

5. The method according to any one of claims 1 to 4, further comprising:
in response to receiving a second control event triggered by the user through the control component of the electronic device, dispatching the second control event to the target screen.

6. The method according to any one of claims 1 to 5, further comprising:
in response to receiving a second control switching instruction triggered by the user, switching the control object of the external control device from the virtual screen to the target screen.

7. An electronic device (400) connected with an external control device, the electronic device comprising:
a processor (420); and
a memory (404) for storing instructions executable by the processor(420);
wherein the processor (420) is configured to:
in response to receiving a screen projection instruction triggered by a user, determine a virtual screen to be projected according to a target interface displayed by a target screen of the electronic device;
project the virtual screen to a target screen projecting device; and
in response to receiving a first control switching instruction triggered by the user, switch a control object of the external control device from the target screen to the virtual screen and setting a control object of a control component of the electronic device as the target screen;
**characterized in that** prompt information for prompting that the control object of the external control device is switched to the virtual screen is displayed on the target screen after the control object of the external control device is switched from the target screen to the virtual screen.

8. The electronic device according to claim 7, wherein the processor (420) is further configured to:
acquire, from the first control switching instruction, a screen identifier of the virtual screen;
and
switch the control object of the external control device from the target screen to the virtual screen according to the screen identifier.

9. The electronic device according to claim 7 or 8, wherein the processor (420) is further configured to:
determine a screen projection object selected by the user from the target interface;
generate a screen projection interface according to the screen projection object; and
determine the virtual screen according to the screen projection interface, the virtual screen displaying the screen projection interface.

10. The electronic device according to any one of claims 7 to 9, wherein the processor (420) is further configured to:
in response to receiving a first control event triggered by the user via the external control device, dispatch the first control event to the virtual screen.

11. The electronic device according to any one of claims 7 to 10, wherein the processor (420) is further configured to:
in response to receiving a second control event triggered by the user through the control component of the electronic device, dispatch the second control event to the target screen.

12. The electronic device according to any one of claims 7 to 11, wherein the processor (420) is further configured to:
in response to receiving a second control switching instruction triggered by the user, switch the control object of the external control device from the virtual screen to the target screen.

13. A non-transitory computer-readable storage medium, on which computer program instructions are stored, when the program instructions are executed by a processor (420), the processor (420) is caused to:
in response to receiving a screen projection instruction triggered by a user, determine a virtual screen to be projected according to a target interface displayed by a target screen of an electronic device;
project the virtual screen to a target screen projecting device; and
in response to receiving a first control switching instruction triggered by the user, switch a control object of an external control device from the target screen to the virtual screen and setting a control object of a control component of the electronic device as the target screen;
**characterized in that** prompt information for prompting that the control object of the external control device is switched to the virtual screen is displayed on the target screen after the control object of the external control device is switched from the target screen to the virtual screen.

14. The non-transitory computer-readable storage medium according to claim 13, when the program instructions are executed by a processor (420), the processor (420) is further caused to:
acquire, from the first control switching instruction, a screen identifier of the virtual screen;
and
switch the control object of the external control device from the target screen to the virtual screen according to the screen identifier.

## Patentansprüche

1. Verfahren zur Bildschirmprojektion, das von einem mit einem externen Steuergerät verbundenen elektronischen Gerät ausgeführt wird, umfassend:
bei Empfang einer von einem Benutzer ausgelösten Bildschirmprojektionsanweisung, Bestimmen (S201) eines zu projizierenden virtuellen Bildschirms in Abhängigkeit von einer Zielschnittstelle, die auf einem Zielbildschirm des elektronischen Geräts angezeigt wird;
Projizieren (S202) des virtuellen Bildschirms auf ein Zielbildschirm-Projektionsgerät; und
bei Empfang einer von dem Benutzer ausgelösten ersten Steuerumschaltanweisung, Umschalten (S203) eines Steuerobjekts des externen Steuergeräts vom Zielbildschirm auf den virtuellen Bildschirm sowie Setzen eines Steuerobjekts einer Steuerkomponente des elektronischen Geräts als Zielbildschirm;
**dadurch gekennzeichnet, dass** nach dem Umschalten des Steuerobjekts des externen Steuergeräts vom Zielbildschirm auf den virtuellen Bildschirm Hinweisinformationen auf dem Zielbildschirm angezeigt werden, die darauf hinweisen, dass das Steuerobjekt des externen Steuergeräts auf den virtuellen Bildschirm umgeschaltet wurde.

2. Verfahren nach Anspruch 1, wobei bei Empfang der von dem Benutzer ausgelösten ersten Steuerumschaltanweisung das Umschalten (S203) des Steuerobjekts des externen Steuergeräts vom Zielbildschirm auf den virtuellen Bildschirm umfasst:
Erfassen einer Bildschirmkennung des virtuellen Bildschirms aus der ersten Steuerumschaltanweisung; und
Umschalten des Steuerobjekts des externen Steuergeräts vom Zielbildschirm auf den virtuellen Bildschirm in Abhängigkeit von der Bildschirmkennung.

3. Verfahren nach Anspruch 1 oder 2, wobei das Bestimmen (S201) des zu projizierenden virtuellen Bildschirms in Abhängigkeit von der Zielschnittstelle, die auf dem Zielbildschirm des elektronischen Geräts angezeigt wird, umfasst:
Bestimmen eines von dem Benutzer aus der Zielschnittstelle ausgewählten Bildschirmprojektionsobjekts;
Erzeugen einer Bildschirmprojektionsschnittstelle in Abhängigkeit von dem Bildschirmprojektionsobjekt; und
Bestimmen des virtuellen Bildschirms in Abhängigkeit von der Bildschirmprojektionsschnittstelle, wobei der virtuelle Bildschirm die Bildschirmprojektionsschnittstelle anzeigt.

4. Verfahren nach einem der Ansprüche 1 bis 3, ferner umfassend:
bei Empfang eines von dem Benutzer über das externe Steuergerät ausgelösten ersten Steuerereignisses, Weiterleiten des ersten Steuerereignisses an den virtuellen Bildschirm.

5. Verfahren nach einem der Ansprüche 1 bis 4, ferner umfassend:
bei Empfang eines von dem Benutzer über die Steuerkomponente des elektronischen Geräts ausgelösten zweiten Steuerereignisses, Weiterleiten des zweiten Steuerereignisses an den Zielbildschirm.

6. Verfahren nach einem der Ansprüche 1 bis 5, ferner umfassend:
bei Empfang einer von dem Benutzer ausgelösten zweiten Steuerumschaltanweisung, Umschalten des Steuerobjekts des externen Steuergeräts vom virtuellen Bildschirm auf den Zielbildschirm.

7. Elektronisches Gerät (400), das mit einem externen Steuergerät verbunden ist, wobei das elektronische Gerät umfasst:
einen Prozessor (420); und
einen Speicher (404) zum Speichern von Anweisungen, die durch den Prozessor (420) ausgeführt werden können;
wobei der Prozessor (420) dazu ausgebildet ist:
bei Empfang einer von einem Benutzer ausgelösten Bildschirmprojektionsanweisung, einen zu projizierenden virtuellen Bildschirm in Abhängigkeit von einer Zielschnittstelle zu bestimmen, die auf einem Zielbildschirm des elektronischen Geräts angezeigt wird;
den virtuellen Bildschirm auf ein Zielbildschirm-Projektionsgerät zu projizieren; und
bei Empfang einer von dem Benutzer ausgelösten ersten Steuerumschaltanweisung, ein Steuerobjekt des externen Steuergeräts vom Zielbildschirm auf den virtuellen Bildschirm umzuschalten und ein Steuerobjekt einer Steuerkomponente des elektronischen Geräts als Zielbildschirm zu setzen;
**dadurch gekennzeichnet, dass** nach dem Umschalten des Steuerobjekts des externen Steuergeräts vom Zielbildschirm auf den virtuellen Bildschirm Hinweisinformationen auf dem Zielbildschirm angezeigt werden, die darauf hinweisen, dass das Steuerobjekt des externen Steuergeräts auf den virtuellen Bildschirm umgeschaltet wurde.

8. Elektronisches Gerät nach Anspruch 7, wobei der Prozessor (420) ferner dazu ausgebildet ist:
eine Bildschirmkennung des virtuellen Bildschirms aus der ersten Steuerumschaltanweisung zu erfassen; und
das Steuerobjekt des externen Steuergeräts vom Zielbildschirm auf den virtuellen Bildschirm in Abhängigkeit von der Bildschirmkennung umzuschalten.

9. Elektronisches Gerät nach Anspruch 7 oder 8, wobei der Prozessor (420) ferner dazu ausgebildet ist:
ein von dem Benutzer aus der Zielschnittstelle ausgewähltes Bildschirmprojektionsobjekt zu bestimmen;
eine Bildschirmprojektionsschnittstelle in Abhängigkeit von dem Bildschirmprojektionsobjekt zu erzeugen; und
den virtuellen Bildschirm in Abhängigkeit von der Bildschirmprojektionsschnittstelle zu bestimmen, wobei der virtuelle Bildschirm die Bildschirmprojektionsschnittstelle anzeigt.

10. Elektronisches Gerät nach einem der Ansprüche 7 bis 9, wobei der Prozessor (420) ferner dazu ausgebildet ist:
bei Empfang eines von dem Benutzer über das externe Steuergerät ausgelösten ersten Steuerereignisses, das erste Steuerereignis an den virtuellen Bildschirm weiterzuleiten.

11. Elektronisches Gerät nach einem der Ansprüche 7 bis 10, wobei der Prozessor (420) ferner dazu ausgebildet ist:
bei Empfang eines von dem Benutzer über die Steuerkomponente des elektronischen Geräts ausgelösten zweiten Steuerereignisses, das zweite Steuerereignis an den Zielbildschirm weiterzuleiten.

12. Elektronisches Gerät nach einem der Ansprüche 7 bis 11, wobei der Prozessor (420) ferner dazu ausgebildet ist:
bei Empfang einer von dem Benutzer ausgelösten zweiten Steuerumschaltanweisung, das Steuerobjekt des externen Steuergeräts vom virtuellen Bildschirm auf den Zielbildschirm umzuschalten.

13. Nichtflüchtiges computerlesbares Speichermedium, auf dem Computerprogrammanweisungen gespeichert sind, wobei bei Ausführung der Programmanweisungen durch einen Prozessor (420) der Prozessor (420) veranlasst wird:
bei Empfang einer von einem Benutzer ausgelösten Bildschirmprojektionsanweisung, einen zu projizierenden virtuellen Bildschirm in Abhängigkeit von einer Zielschnittstelle zu bestimmen, die auf einem Zielbildschirm eines elektronischen Geräts angezeigt wird;
den virtuellen Bildschirm auf ein Zielbildschirm-Projektionsgerät zu projizieren; und
bei Empfang einer von dem Benutzer ausgelösten ersten Steuerumschaltanweisung, ein Steuerobjekt eines externen Steuergeräts vom Zielbildschirm auf den virtuellen Bildschirm umzuschalten und ein Steuerobjekt einer Steuerkomponente des elektronischen Geräts als Zielbildschirm zu setzen;
**dadurch gekennzeichnet, dass** nach dem Umschalten des Steuerobjekts des externen Steuergeräts vom Zielbildschirm auf den virtuellen Bildschirm Hinweisinformationen auf dem Zielbildschirm angezeigt werden, die darauf hinweisen, dass das Steuerobjekt des externen Steuergeräts auf den virtuellen Bildschirm umgeschaltet wurde.

14. Nichtflüchtiges computerlesbares Speichermedium nach Anspruch 13, wobei bei Ausführung der Programmanweisungen durch einen Prozessor (420) der Prozessor (420) ferner veranlasst wird:
eine Bildschirmkennung des virtuellen Bildschirms aus der ersten Steuerumschaltanweisung zu erfassen; und
das Steuerobjekt des externen Steuergeräts vom Zielbildschirm auf den virtuellen Bildschirm in Abhängigkeit von der Bildschirmkennung umzuschalten.

## Revendications

1. Procédé de projection d'écran, mis en œuvre par un dispositif électronique qui est connecté à un dispositif de commande externe, comprenant les étapes consistant à :
en réponse à la réception d'une instruction de projection d'écran déclenchée par un utilisateur, déterminer (S201) un écran virtuel à projeter conformément à une interface cible affichée par un écran cible du dispositif électronique ;
projeter (S202) l'écran virtuel sur un dispositif de projection d'écran cible ; et
en réponse à la réception d'une première instruction de commutation de commande déclenchée par l'utilisateur, commuter (S203) un objet de commande du dispositif de commande externe de l'écran cible à l'écran virtuel et définir un objet de commande d'un composant de commande du dispositif électronique en tant que l'écran cible ;
**caractérisé en ce que** des informations de rappel, destinées à rappeler la commutation de l'objet de commande du dispositif de commande externe à l'écran virtuel, sont affichées sur l'écran cible après la commutation de l'objet de commande du dispositif de commande externe de l'écran cible à l'écran virtuel.

2. Procédé selon la revendication 1, dans lequel, en réponse à la réception de la première instruction de commutation de commande déclenchée par l'utilisateur, l'étape de commutation (S203) de l'objet de commande du dispositif de commande externe de l'écran cible à l'écran virtuel consiste à :
acquérir, à partir de la première instruction de commutation de commande, un identifiant d'écran de l'écran virtuel ; et
commuter l'objet de commande du dispositif de commande externe de l'écran cible à l'écran virtuel conformément à l'identifiant d'écran.

3. Procédé selon la revendication 1 ou la revendication 2, dans lequel l'étape de détermination (S201) de l'écran virtuel à projeter conformément à l'interface cible affichée par l'écran cible du dispositif électronique consiste à :
déterminer un objet de projection d'écran sélectionné par l'utilisateur à partir de l'interface cible ;
générer une interface de projection d'écran conformément à l'objet de projection d'écran ; et
déterminer l'écran virtuel conformément à l'interface de projection d'écran, l'écran virtuel affichant l'interface de projection d'écran.

4. Procédé selon l'une quelconque des revendications 1 à 3, comprenant en outre l'étape consistant à :
en réponse à la réception d'un premier événement de commande déclenché par l'utilisateur par le biais du dispositif de commande externe, envoyer le premier événement de commande à l'écran virtuel.

5. Procédé selon l'une quelconque des revendications 1 à 4, comprenant en outre l'étape consistant à :
en réponse à la réception d'un second événement de commande déclenché par l'utilisateur par l'intermédiaire du composant de commande du dispositif électronique, envoyer le second événement de commande à l'écran cible.

6. Procédé selon l'une quelconque des revendications 1 à 5, comprenant en outre l'étape consistant à :
en réponse à la réception d'une seconde instruction de commutation de commande déclenchée par l'utilisateur, commuter l'objet de commande du dispositif de commande externe de l'écran virtuel à l'écran cible.

7. Dispositif électronique (400) connecté à un dispositif de commande externe, le dispositif électronique comprenant :
un processeur (420) ; et
une mémoire (404) destinée à maintenir des instructions exécutables par le processeur (420) ;
dans lequel le processeur (420) est configuré pour :
en réponse à la réception d'une instruction de projection d'écran déclenchée par un utilisateur, déterminer un écran virtuel à projeter conformément à une interface cible affichée par un écran cible du dispositif électronique ;
projeter l'écran virtuel sur un dispositif de projection d'écran cible ; et
en réponse à la réception d'une première instruction de commutation de commande déclenchée par l'utilisateur, commuter un objet de commande du dispositif de commande externe de l'écran cible à l'écran virtuel et définir un objet de commande d'un composant de commande du dispositif électronique en tant que l'écran cible ;
**caractérisé en ce que** des informations de rappel, destinées à rappeler la commutation de l'objet de commande du dispositif de commande externe à l'écran virtuel, sont affichées sur l'écran cible après la commutation de l'objet de commande du dispositif de commande externe de l'écran cible à l'écran virtuel.

8. Dispositif électronique selon la revendication 7, dans lequel le processeur (420) est en outre configuré pour :
acquérir, à partir de la première instruction de commutation de commande, un identifiant d'écran de l'écran virtuel ; et
commuter l'objet de commande du dispositif de commande externe de l'écran cible à l'écran virtuel conformément à l'identifiant d'écran.

9. Dispositif électronique selon la revendication 7 ou la revendication 8, dans lequel le processeur (420) est en outre configuré pour :
déterminer un objet de projection d'écran sélectionné par l'utilisateur à partir de l'interface cible ;
générer une interface de projection d'écran conformément à l'objet de projection d'écran ; et
déterminer l'écran virtuel conformément à l'interface de projection d'écran, l'écran virtuel affichant l'interface de projection d'écran.

10. Dispositif électronique selon l'une quelconque des revendications 7 à 9, dans lequel le processeur (420) est en outre configuré pour :
en réponse à la réception d'un premier événement de commande déclenché par l'utilisateur par le biais du dispositif de commande externe, envoyer le premier événement de commande à l'écran virtuel.

11. Dispositif électronique selon l'une quelconque des revendications 7 à 10, dans lequel le processeur (420) est en outre configuré pour :
en réponse à la réception d'un second événement de commande déclenché par l'utilisateur par l'intermédiaire du composant de commande du dispositif électronique, envoyer le second événement de commande à l'écran cible.

12. Dispositif électronique selon l'une quelconque des revendications 7 à 11, dans lequel le processeur (420) est en outre configuré pour :
en réponse à la réception d'une seconde instruction de commutation de commande déclenchée par l'utilisateur, commuter l'objet de commande du dispositif de commande externe de l'écran virtuel à l'écran cible.

13. Support d'informations non transitoire lisible par ordinateur, sur lequel sont maintenues des instructions de programme d'ordinateur, lorsque les instructions de programme sont exécutées par un processeur (420), le processeur (420) est amené à :
en réponse à la réception d'une instruction de projection d'écran déclenchée par un utilisateur, déterminer un écran virtuel à projeter conformément à une interface cible affichée par un écran cible d'un dispositif électronique ;
projeter l'écran virtuel sur un dispositif de projection d'écran cible ; et
en réponse à la réception d'une première instruction de commutation de commande déclenchée par l'utilisateur, commuter un objet de commande d'un dispositif de commande externe de l'écran cible à l'écran virtuel et définir un objet de commande d'un composant de commande du dispositif électronique en tant que l'écran cible ;
**caractérisé en ce que** des informations de rappel, destinées à rappeler la commutation de l'objet de commande du dispositif de commande externe à l'écran virtuel, sont affichées sur l'écran cible après la commutation de l'objet de commande du dispositif de commande externe de l'écran cible à l'écran virtuel.

14. Support d'informations non transitoire lisible par ordinateur selon la revendication 13, dans lequel, lorsque les instructions de programme sont exécutées par un processeur (420), le processeur (420) est en outre amené à :
acquérir, à partir de la première instruction de commutation de commande, un identifiant d'écran de l'écran virtuel ; et
commuter l'objet de commande du dispositif de commande externe de l'écran cible à l'écran virtuel conformément à l'identifiant d'écran.
